# EUROPEAN PATENT APPLICATION

(11) **EP 3 118 447 A2**
(43) Date of publication of application: **18.01.2017**
(21) Application number: 16178175.2
(22) Date of filing: 06.07.2016
(51) Int. Cl.: F03D 7/00, F16H 1/32

(54) **WINDMILL DRIVE UNIT**

(30) Priority: 17.07.2015 JP 2015143289
(71) Applicant: Nabtesco Corporation, Tokyo 102-0093 (JP)
(72) Inventor: ASAKAWA, Yuichi, Fuwa-gun, Gifu 503-2121 (JP)
(74) Representative: Grünecker Patent- und Rechtsanwälte PartG mbB

(57) **Abstract**

To prevent breakage of a ring gear of a windmill system. A reduction gear 1 includes a case 10 having inner teeth 12 formed in an inner circumferential side thereof, a gear 40 having outer teeth 41 meshed with the inner teeth 12, a crank shaft 50 configured to oscillate the gear 40, a carrier 60 rotatably holding the crank shaft 50 and holding the gear 40, and an output shaft 100 connected to the carrier 60 through a carrier side spline part 65 and an output-shaft side spline part 102. The carrier side spline part 65 has a first cutout portion 65a and a first engagement portion 65b, and the output-shaft side spline pat 102 has a second cutout portion 102a and a second engagement portion 102b.

## Description

### BACKGROUND OF THE INVENTION

### Field of the Invention

The present invention relates to a windmill drive unit including a reduction gear and a motor in communication with the reduction gear.

### Background Art

A reduction gear of an eccentric oscillation-type is known as a reduction gear for use in a windmill drive unit. Generally, such a reduction gear includes: a case having internal teeth formed in an inner circumferential side thereof; a gear (referred to as external teeth gear herebelow) having external teeth meshed with the internal teeth; a crank shaft inserted to a through-hole formed in the external teeth gear and configured to oscillate the external teeth gear by rotation thereof; a carrier holding the external teeth gear through the crank shaft; and an output shaft connected to the carrier through a spline. In this case, the spline has a carrier side spline and an output-shaft side spline.

Such a windmill drive unit is configured to drive a nacelle of a windmill in rotation. In this case, a plurality of windmill drive units are installed in the nacelle of the windmill. The windmill drive units are installed on the side of the nacelle. An output shaft of each windmill drive unit is engaged with a ring gear on the side of a windmill tower, so that the nacelle is rotated by the windmill drive unit with respect to the windmill tower.

During use, there is a possibility that excessive external force is applied from the side of the windmill to the windmill drive unit. In this case, excessive force is generated between the output shaft of the windmill drive unit and the ring gear, which may result in breakage of the ring gear.

Patent Document 1: JP2014-211204A

### SUMMARY OF THE INVENTION

The present invention has been made in view of the above circumstances. The object of the present invention is to provide a windmill drive unit which prevents breakage of a ring gear on the side of a windmill tower, even when excessive external force is applied from the side of a windmill to the windmill drive unit.

The present invention is a windmill drive unit comprising: a reduction gear including a case having inner teeth formed in an inner circumferential side thereof, a gear having outer teeth meshed with the inner teeth, a crank shaft configured to oscillate the gear, a carrier rotatably holding the crank shaft and holding the gear, and an output shaft connected to the carrier through a spline; and a motor connected to the reduction gear; wherein: the spline includes a carrier side spline having a first cutout portion and a first engagement portion that are alternately arranged, and an output-shaft side spline having a second cutout portion and a second engagement portion that are alternately arranged; and there is provided a moving mechanism configured to axially move one of the carrier and the output shaft.

The present invention is the windmill drive unit wherein the first cutout portion, the first engagement portion, the second cutout portion and the second engagement portion have the same axial length.

The present invention is the windmill drive unit wherein an axial length of the first cutout portion is larger than an axial length of the second engagement portion, and an axial length of the second cutout portion is larger than an axial length of the first engagement portion.

The present invention is the windmill drive unit wherein the case of the reduction gear is equipped with a detection sensor configured to detect, when excessive external force is applied to the case, the external force, and the moving mechanism is driven by a detection signal from the detection sensor.

According to the present invention, even when excessive external force is applied from the side of the windmill to the windmill drive unit, breakage of the ring gear on the side of the windmill tower can be prevented.

### BRIEF DESCRIPTION OF THE DRAWINGS

Fig. 1 is a sectional view showing a windmill drive unit according to one embodiment of the present invention.
Fig. 2 is a partial enlarged sectional view showing a spline part of the windmill drive unit.
Fig. 3 is a partial enlarged sectional view showing the spline part showing the action of the windmill drive unit.
Fig. 4 is a partial enlarged sectional view showing the spline part showing the action of the windmill drive unit.
Fig. 5 is a partial enlarged sectional view showing the spline part according to a modification example of the present invention.
Fig. 6 is a view showing that the windmill drive unit is secured on a rotating pedestal.
Fig. 7 is a schematic view showing a windmill system as a hole in which the windmill drive unit is installed.

### DETAILED DESCRIPTION OF THE INVENTION

### <Embodiment of Present Invention>

An embodiment of the present invention is explained herebelow with reference to the drawings.

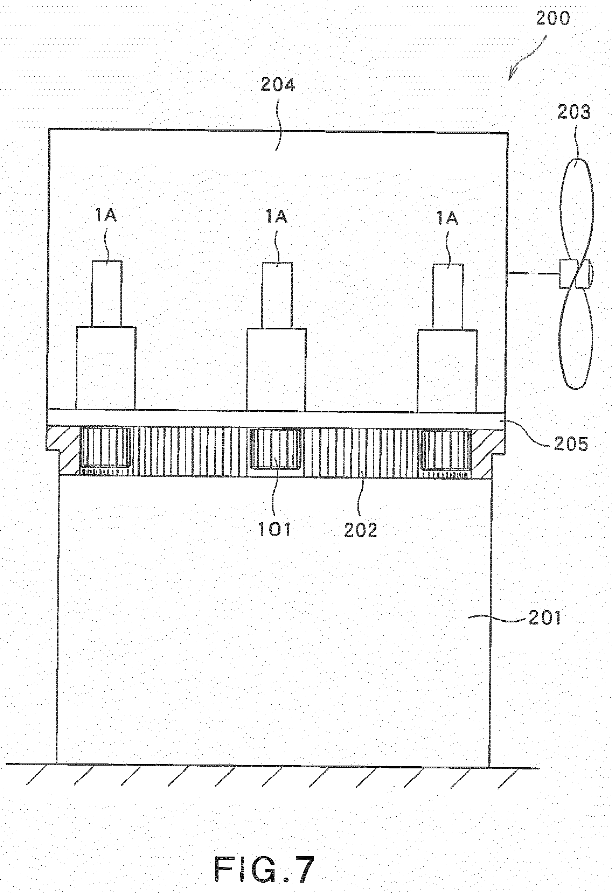

Firstly, a windmill system 200 as a whole in which a windmill drive unit 1A according to this embodiment is located is described with reference to Fig. 7.

The windmill system 200 includes a windmill tower 201 having a ring gear 202 serving as an internal teeth gear, a nacelle 204 having a rotating pedestal 205 rotatably provided on the windmill tower 201, and a windmill 203 installed on the nacelle 204.

The windmill drive unit 1A according to this embodiment is installed on the rotating pedestal 205 of the windmill system 200 as structured above. A below-described output shaft 100 is engaged with the ring gear 202 of the windmill tower 201 so as to rotate the rotating pedestal 205 of the nacelle 204 with respect to the windmill tower 201.

Since the rotating pedestal 205 is rotated, an orientation of the windmill 203 fixed on the nacelle 204 can be changed.

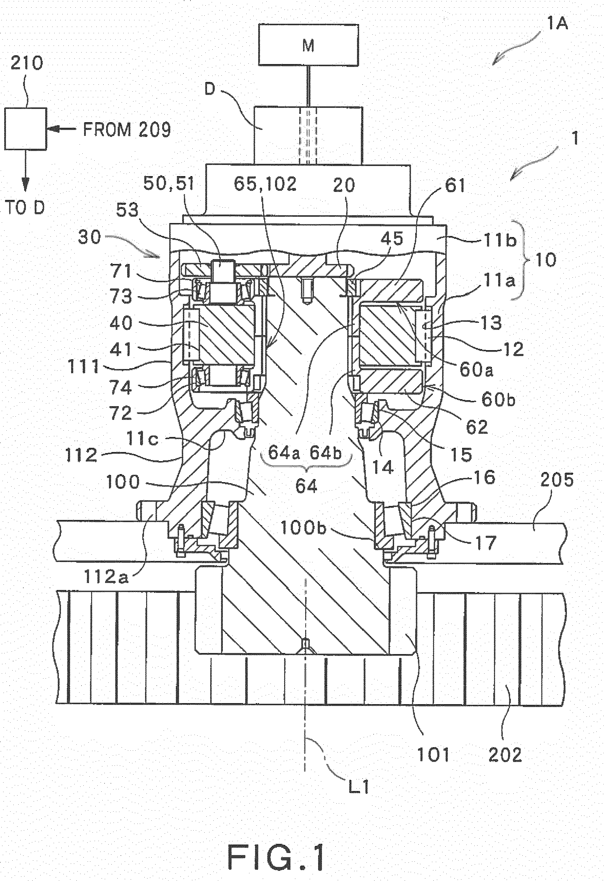

The windmill drive unit 1A according to the embodiment shown in Fig. 1 includes a reduction gear 1, and a motor M connected to the reduction gear 1. The reduction gear 1 is an eccentric oscillation-type reduction gear. The reduction gear 1 is used as a yaw drive unit for yaw driving, or as a pitch drive unit for pitch driving, in order to rotate the nacelle 204 rotatably disposed with respect to the windmill tower 201.

As shown in Fig. 1, the reduction gear 1 of the windmill drive unit 1A according to this embodiment includes a case 10, an input gear 20 and a reduction part 30 housed in the case 10, and an output shaft 100 one end of which is joined to the reduction part 30 and the other of which projects from the case 10. The case 10 has a cylindrical shape, and has internal teeth 12 formed in an inner circumferential side (inner circumferential surface). The reduction part 30 includes an external teeth gear 40 having external teeth 41 meshed with the internal teeth 12 of the case 10, a crank shaft 50 configured to oscillate the external teeth gear 40, and a carrier 60 rotatably holding the crank shaft 50 and holding the external teeth gear 40 through the crank shaft 50.

In the reduction gear 1, rotation inputted from the motor M through the input gear 20 is decelerated by the reduction part 30, and is outputted from the output shaft 100. The other end of the output shaft 100, which projects from the case 10, is equipped with a drive gear 101. The rotation inputted from the input gear 20 is decelerated and transmitted to the ring gear 20 meshed with the drive gear 101.

In the drawings, the reference symbol L1 depicts a central axis of the output shaft 100. A central axis of the inner circumferential surface of the case 10 provided with the internal teeth 12 is positioned coaxially with the central axis L1. Herebelow, the mere term "axial direction" (axially) means a direction extending along the central axis L1 or a direction in parallel with the central axis L1. In addition, a direction perpendicular to the central axis L1 is referred to as radial direction (radially), and a direction around the central axis L1 is referred to as circumferential direction (circumferentially).

The case 10 includes a main case part 11a having a cylindrical shape with both ends being opened, and a sub case part 11b mounted on the opened portion on one side of the main case part 11a.

The main case part 11a and the sub case part 11b are connected by fastening their peripheral portions by bolts (not shown). The output shaft 100 projects from the main case part 11a on the other side opposed to the one end on which the sub case part 11b is mounted. An annular wall part 11c extending radially inward is formed in an inner circumferential surface of an intermediate portion between the one end of the main case part 11a and the other end thereof.

The main case part 11a has an input side portion 111, which is located on one end side with respect to the annular wall part 11c, i.e., on the side of the sub case part 11b, and an output side portion 112, which is located on the other end side with respect to the annular wall part 11c, i.e., on the side from which the output shaft 100 projects. The reduction part 30 is housed in the input side portion 111, and the aforementioned internal teeth 12 are provided in an inner circumferential surface of the input side portion 111.

The internal teeth 12 has a pin-like shape. The internal teeth 12 are fitted in and attached to a plurality of pin grooves 13 circumferentially formed in the whole area of the inner circumferential surface of the input side portion 111 of the main case part 11a. The internal teeth 12 are arranged such that a longitudinal length thereof is located in parallel with the central axis L1 direction. The internal teeth 12 are arranged along the circumferential direction at equal intervals therebetween in the inner circumferential surface of the input side portion 111 of the main case part 11a, and are configured to be meshed with the external teeth 41 of the aforementioned external teeth gear 40.

The annular wall part 11c of the main case part 11a has an annular first bearing accommodation groove 14 which is concaved from the side of the input side portion 111 toward the side of the output side portion 112. A first bearing 15 is inserted to the first bearing accommodation groove 14. The illustrated first bearing 15 is a conical bearing. An outer ring of the first bearing 15 is axially in contact with or close to a bottom surface of the first bearing accommodation groove 14, and is radially in contact with or close to a side surface of the first bearing accommodation groove 14. Thus, the first bearing 15 is fixed in the first bearing accommodation groove 14.

In addition, the other end (outer end) of the output side portion 112 has an annular second bearing accommodation groove 16 which is concaved from the side of the output side portion 112 toward the side of the input side portion 111. A second bearing 17 is inserted to the second bearing accommodation groove 16. The illustrate second bearing 17 is a conical bearing. An outer ring of the second bearing 17 is axially in contact with or close to a bottom surface of the second bearing accommodation groove 16, and is radially in contact with or close to a side surface of the second bearing accommodation groove 16. Thus, the second bearing 17 is fixed in the second bearing accommodation groove 16.

The output shaft 100 is inserted to an inner circumferential side of an inner ring of the first bearing 15 and an inner circumferential side of an inner ring of the second bearing 17. Thus, the output shaft 100 is rotatably held by the case 10. The output shaft 100 projects from the first bearing 15 to the input side portion 111 of the main case part 11a. The output shaft 100 is joined to the reduction part 30 at a portion projecting from the input side portion 111. An outer circumferential surface of the portion of the output shaft 100, which projects from the input side portion 111 has an output-shaft side spline (referred to also as output-shaft side spline) 102. A carrier side spline part (referred to also as carrier side spline) 65 formed on the carrier 60 of the reduction part 30 is fitted with the output-shaft side spline part 102. Thus, the output shaft 100 and the reduction part 30 are joined (connected) to each other.

The aforementioned input gear 20 is located inside the sub case part 11b of the case 10. The motor M is provided in the sub case part 11b, so that rotation of the motor M is transmitted to the input gear 20. The input gear 20 is a spur gear, and is located such that a central axis thereof is positioned along the central axis L1 of the output shaft 100. Since the input gear 20 is meshed with the below-described spur gear 53 provided on one end of the crank shaft 50, the rotation is transmitted to the crank shaft 50.

As described above, the reduction part 30 includes the external teeth gear 40, the crank shaft 50 and the carrier 60. The carrier 60 has a first holding part 61 rotatably holding one end of the crank shaft 50 (end on the side of the input gear 20), a second holding part 62 rotatably holding the other end of the cark shaft 50 (end from which the output shaft 100 projects), a pillar (not shown) connecting the first holding part 61 and the second holding part 62, and a joint cylindrical part 64 for joining the carrier 60 to the output shaft 100.

The first holding part 61 and the second holding part 62 have an annular shape, and opposedly spaced apart from each other in the axial direction. The pillar is disposed to extend between a substantially radially central area of the first holding part 61 and a substantially radially central area of the second holding part 62 so as to connect the first holding part 61 and the second holding part 62. The joint cylindrical part 64 has a cylindrical shape, and has the carrier side spline part 65 formed in an inner circumferential surface thereof. The output-shaft side spline part 102 of the output shaft 100 is inserted and fitted to the carrier side spline part 65, whereby the output shaft 100 and the reduction part 30 are joined to each other.

The first holding part 61 has a through-hole for first end 71. One end of the crank shaft 50 is rotatably held by the through-hole for first end 71 through a bearing for first crank shaft 73. The second holding part 62 has a through-hole 27 for second end 72. The other end of the crank shaft 50 is rotatably held by the through-hole for second end 72 through a bearing for second crank shaft 74.

In this embodiment, the carrier 60 is axially divided into two. Namely, the carrier 60 is composed of a first half body 60a located on the side of the sub case part 11b, and a second half body 60b located on the side from which the output shaft 100 projects. The first half body 60a has the aforementioned first holding part 61, a first pillar half body constituting a part of the pillar, and a first cylindrical half bod 64a constituting a part of the joint cylindrical part 64. On the other hand, the second half body 60b has the aforementioned second holding part 62, a second pillar half body constituting a part of the pillar 63, and a second cylindrical half body 64b constituting a part of the joint cylindrical part 64.

As shown in Fig. 1, a bolt (not shown) is inserted through the first pillar half body and the second pillar half body, so that the first pillar half body and the second pillar half body are connected to each other by the bolt. Thus, the first half body 60a and the second half body 60b are connected to each other. The aforementioned carrier-side spline part 65 is formed both in the respective inner circumferential surfaces of the first cylindrical half body 64a and the second cylindrical half body 64b.

The crank shaft 50 has a shaft body 51, an eccentric body and the aforementioned spur gear 53. One end of the shaft body 51 is rotatably held by the through-hole for first end 71 through the bearing for first crank shaft 73, and the other end of the shaft body 51 is rotatably held by the through-hole for second end 72 through the bearing for second crank shaft 74. The one end of the shaft body 51 projects from the through-hole for first end 71 to the side of the sub case part 11b. The spur gear 53 is fixed on a portion of the one end of the shaft body 51, which projects from the through-hole for first end 71.

The number of the external teeth 41 of the external teeth gear 40 is smaller than the number of internal teeth 12 in the inner circumference of the case 10 by one or more. Thus, for each rotation of the crank shaft 50, the meshing condition of the external teeth 41 and the internal teeth 12 is shifted, so that the external teeth gear 40 is configured to be eccentrically oscillated and rotated.

As shown in Fig. 1, the output shaft 100 of the reduction gear 1 is axially movable in the case 10. The subcase 11b of the case 10 is equipped with a moving mechanism D that axially moves the output shaft 100. As described below, when excessive external force is applied to the windmill drive unit 1A, the moving mechanism D is driven by a controller 210 based on a detection signal from a detection sensor 209 which is configured to detect the external force, so as to axially move the output shaft 100.

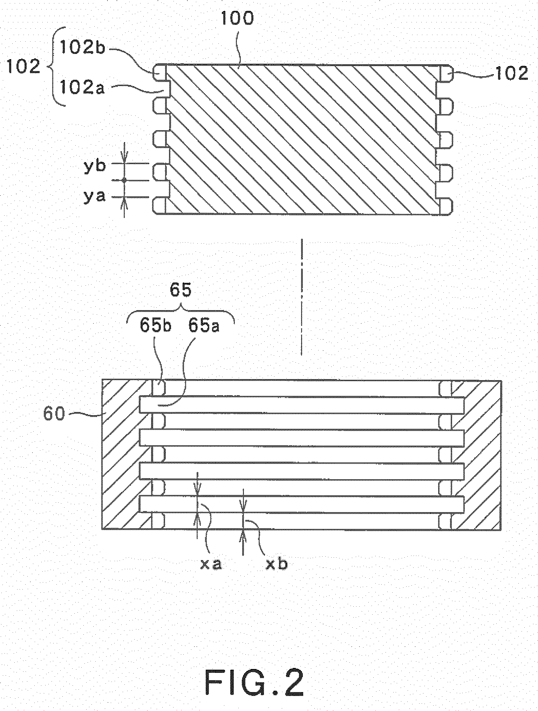

Next, the carrier side spline part 65, the output-shaft side spline part 102 are explained with reference to Figs. 2 to 4 and 6.

As shown in Fig. 2 to 4 and 6, the carrier side spline part 65 is formed on the carrier 60, and the output-shaft side spline part 102 is formed on the output shaft 100. By fitting the carrier side spline part 65 and the output-shaft side spline part 102 to each other, the output shaft 100 and the reduction part 30 are joined (connected) to each other. The carrier side spline part 65 and the output-shaft side spline part 102 constitute a spline part (also referred to as spline) 65, 102.

The carrier side spline part 65 has a first cutout portion 65a and a first engagement portion 65b that are alternately arranged in the axial direction. There are provided a plurality of the first cutout portions 65a and a plurality of the first engagement portions 65b. In this case, each first cutout portion 65a is a portion that is concaved outward, and each first engagement portion 65b is a portion that projects inward.

On the other hand, the output-shaft side spline part 102 has a second cutout portion 102a and a second engagement portion 102b that are alternately arranged in the axial direction. There are provided a plurality of the second cutout portions 102a and a plurality of the second engagement portions 102b. In this case, each second cutout portion 102a is a portion that is concaved inward, and each second engagement portion 102b is a portion that projects outward.

As shown in Fig. 2, an axial length of the first cutout portion 65a of the carrier side spline part 65 is represented as Xₐ, and an axial length of the first engagement portion 65b is represented as X_{b}. In addition, an axial length of the second cutout portion 102a of the output-shaft side spline part 102 is represented as Yₐ, and an axial length of the second engagement portion 102b is represented as V_{b}.

In this embodiment, Xₐ, X_{b}, Yₐ and Y_{b} are equal to one another (Xₐ = X_{b} = Ya = Y_{b}).

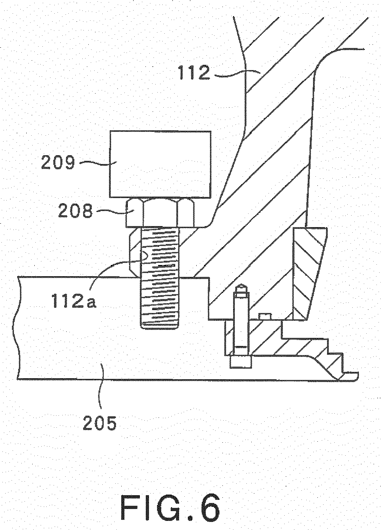

A bolt hole 112a is formed in the output side portion 112 of the main case part 11a of the windmill drive unit 1A. By inserting a fastening bolt 208 to the bolt hole 112, the windmill drive unit 1A can be securely fastened to the rotating pedestal 205 (see Fig. 6). The fastening bolt 208 is equipped with the detection sensor 209 which is configured to detect, when excessive external force is applied toward the windmill drive unit 1A from the side of the windmill 203, the external force.

For example, when excessive external force is abruptly applied from the side of the windmill 203, the nacelle 204 is rotated. At this time, since the drive gear 101 of the output shaft 100 is engaged with the ring gear 202, there is a possibility that the windmill drive unit 1A on the rotating pedestal 205 is inclined by the external force from the side of the windmill 203. In this case, axial force is generated in the fastening bolt 203 by the inclination of the windmill drive unit 1A.

In this embodiment, since the axial force generated in the fastening bolt 203 is detected by the detection sensor 209, the inclination of the windmill drive unit 1A on the rotating pedestal 205, i.e., the external force applied from the side of the windmill 203 to the windmill drive unit 1A can be detected.

When the axial force in the fastening bolt 203 is detected by the detection sensor 209, the detection signal from the detection sensor 209 is sent to the controller 210. Then, the moving mechanism D is driven by the control unit 210.

Next, an operation of this embodiment is explained.

In the aforementioned windmill drive unit 1A, when the input gear 20 is rotated by the motor M, each spur gear 53 meshed with the input gear 20 is rotated, so that each crank shaft 50 is rotated. In accordance with the rotation, the external teeth gear 40 is eccentrically oscillated and rotated, in such a manner that the meshing condition with the inner teeth 12 is shifted. In accordance with the eccentric rotation of the external teeth gear 40, each crank shaft 50 revolves about the central axis L1 while rotating on its axis. Due to the revolution of the crank shaft 50, the carrier 60 holding the crank shaft 50 is rotated. Thus, the output shaft 100, which is spline-connected to the carrier 60 through the carrier side spline part 65 and the output-shaft side spline part 102, is rotated, whereby torque is transmitted from the drive gear 101 to the ring gear 202 to change orientations of the nacelle 204 and the windmill 203.

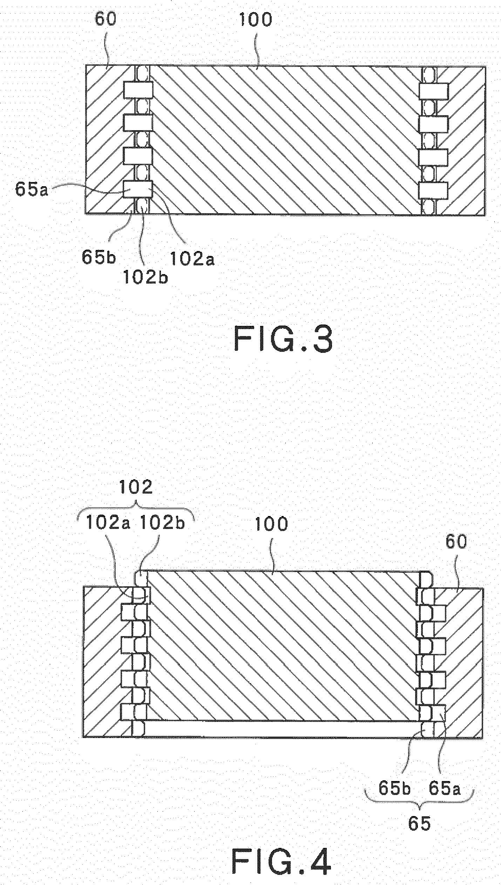

During this operation, the first engagement portions 65b of the carrier side spline part 65 and the second engagement portions 102b of the output -shaft side spline part 102 are engaged with each other, and the first cutout portions 65a of the carrier side spline part 65 and the second cutout portions 65b of the output-shaft side spline part 102 face to each other (see Fig. 3).

Since the first engagement portions 65b of the carrier side spline part 65 and the second engagement portions 102b of the output-shaft side spline part 102 are engaged with each other, the rotation of the carrier 60 can be transmitted to the output shaft 100.

Then, when excessive external force is abruptly applied from the side of the windmill 203 to side the windmill drive unit 1A, the excessive external force applied to the side of the windmill drive unit 1A can be detected by the detection sensor 209 attached to the fastening bolt 203. A detection signal from the detection sensor 209 is then sent to the controller 210.

Then, the moving mechanism D is driven by the controller 210, and the output shaft 100 is moved by the moving mechanism D by a distance (pitch) corresponding to the axial length of the first cutout portion 65a, the first engagement portion 65b, the second cutout portion 102a and the second engagement portion 102b (see Fig. 4). When the number of first cutout portions 65a and the number of second cutout portions 102a are increased, the moving amount can be made smaller.

In this case, since the first cutout portions 65a of the carrier side spline part 65 face the second engagement portions 102b of the output-shaft side spline part 102, and the first engagement portions 65b of the carrier side spline part 65 face the second cutout portions 102a of the output-shaft side spline part 102, the carrier side spline part 65 and the output-shaft side spline part 102 are disengaged from each other.

According to this embodiment, in the normal condition, the first engagement portions 65b of the carrier side spline part 65 and the second engagement portions 102b of the output-shaft side spline part 102 are engaged with each other. However, when excessive external force is abruptly applied from the side of the windmill 203 to the side of the windmill drive unit 1A, the moving mechanism D moves the output shaft 100 by a distance (pitch) corresponding to the axial length of the first cutout portion 65a, the first engagement portion 65b, the second cutout portion 102a and the second engagement portion 102b. Thus, the carrier side spline part 65 and the output-shaft side spline part 102 can be disengaged from each other. As a result, there is no possibility that the excessive force is applied to between the drive gear 101 of the output shaft 100 and the ring gear 202, whereby breakage of the ring gear 202 by the drive gear 101 can be prevented.

### <Modification Example>

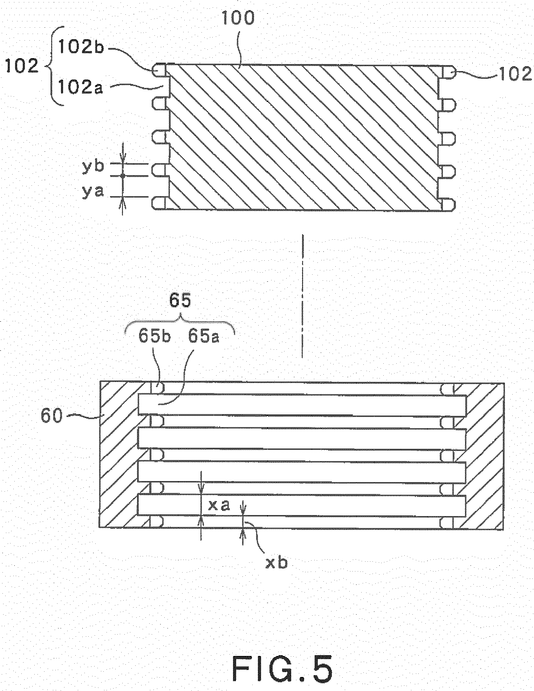

Next, a modification example of the present invention, i.e., a modification example of the carrier side spline part 65 and the output-shaft side spline part 102 is explained with reference to Fig. 5.

As shown in Fig. 5, the carrier side spline part 65 is formed on the carrier 60, and the output-shaft side spline part 102 is formed on the output shaft 100. When the carrier side spline part 65 and the output-shaft side spline part 102 are fitted with each other, the output shaft 100 and the reduction part 30 are joined to each other. The carrier side spline part 65 and the output-shaft side spline part 102 constitute a spline part (also referred to as spline) 65, 102.

The carrier side spline part 65 has a first cutout portion 65a and a first engagement portion 65b that are alternately arranged in the axial direction. There are provided a plurality of the first cutout portions 65a and a plurality of the first engagement portions 65b. In this case, each first cutout portion 65a is a portion that is concaved outward, and each first engagement portion 65b is a portion that projects inward.

On the other hand, the output-shaft side spline part 102 has a second cutout portion 102a and a second engagement portion 102b that are alternately arranged in the axial direction. There are provided a plurality of the second cutout portions 102a and a plurality of the second engagement portions 102b. In this case, each second cutout portion 102a is a portion that is concaved inward, and each second engagement portion 102b is a portion that projects outward.

As shown in Fig. 5, an axial length of the first cutout portion 65a of the carrier side spline part 65 is represented as Xₐ, and an axial length of the first engagement portion 65b is represented as X_{b}. In addition, an axial length of the second cutout portion 102a of the output-shaft side spline part 102 is represented as Yₐ, and an axial length of the second engagement portion 102b is represented as Y_{b}.

In the modification example shown in Fig. 5, a relationship among Xₐ, X_{b}, Yₐ and Y_{b} is as follows. The axial length Xₐ of the first cutout portion 65a is larger than axial length Y_{b} of the second engagement portion 102b (Xₐ > Y_{b}).

In addition, the axial length Yₐ of the second cutout portion 102a is larger than axial length X_{b} of the first engagement portion 65b (Yₐ > X_{b}).

In addition, Xₐ is equal to Yₐ (Xₐ = Yₐ), and X_{b} is equal to Y_{b} (X_{b} = Y_{b}).

In the modification example shown in Fig. 5, parts other than the carrier side spline part 65 and the output-shaft side spline parts 102 are substantially the same as those of the embodiment shown in Figs. 1 to 4 and 6.

In the modification example shown in Fig. 5, the same parts as those of the embodiment shown in Figs. 1 to 4 and 6 are shown by the same reference symbols, and detailed description thereof is omitted.

In the modification example shown in Fig. 5, since the axial length Xₐ of the first cutout portion 65a is larger than axial length Y_{b} of the second engagement portion 102b (Xₐ > Y_{b}), and and the axial length Yₐ of the second cutout portion 102a is larger than axial length X_{b} of the first engagement portion 65b (Yₐ > X_{b}), when excessive external force is applied to the windmill drive unit 1A from the side of the windmill 203, the first engagement portions 65b of the carrier side spline part 65 and the second engagement portions 102b of the output-shaft side spline part 102 can be easily and simply disengaged from each other, only by slightly moving the output shaft 100 by the moving mechanism D.

In the above embodiment, as to the carrier 60 and the output shaft 100, the output shaft 100 is axially moved by the moving mechanism D. However, not limited thereto, the output shaft 100 may be axially fixed, and the carrier 60 may be axially moved.

### Description of Reference Symbols

- 1: Reduction gear
- 1A: Windmill drive unit
- 10: Case
- 12: Inner teeth
- 13: Pin groove
- 15: First bearing
- 17: Second bearing
- 20: Input gear
- 30: Reduction part
- 40: External teeth gear
- 41: External teeth
- 50: Crank shaft
- 60: Carrier
- 65: Carrier side spline part
- 65a: First cutout portion
- 65b: First engagement portion
- 100: Output shaft
- 101: Drive gear
- 102: Output-shaft side spline part
- 102a: Second cutout portion
- 102b: Second engagement portion
- 200: Windmill system
- 201: Windmill tower
- 202: Ring gear
- 203: Windmill
- 204: Nacelle
- 205: Rotating pedestal
- 208: Fastening bolt
- 209: Detection sensor
- M: Motor
- D: Moving mechanism

## Claims

1. A windmill drive unit (1A) comprising:
a reduction gear (1) including a case (10) having inner teeth (12) formed in an inner circumferential side thereof, a gear having outer teeth (41) meshed with the inner teeth (12), a crank shaft (50) configured to oscillate the gear, a carrier rotatably holding the crank shaft (50) and holding the gear (40), and an output shaft (100) connected to the carrier (60) through a spline (65, 102); and
a motor (M) connected to the reduction gear (1);
wherein:
the spline (65, 102) includes a carrier side spline (65) having a first cutout portion (65a) and a first engagement portion (65b) that are alternately arranged, and an output-shaft side spline (102) having a second cutout portion (102a) and a second engagement portion (102b) that are alternately arranged; and
there is provided a moving mechanism (D) configured to axially move one of the carrier (60) and the output shaft (100).

2. The windmill drive unit (1A) according to claim 1, wherein
the first cutout portion (65a), the first engagement portion (65b), the second cutout portion (102a) and the second engagement portion (102b) have the same axial length.

3. The windmill drive unit (1A) according to claim 1, wherein
an axial length of the first cutout portion (65a) is larger than an axial length of the second engagement portion (102b), and an axial length of the second cutout portion (102a) is larger than an axial length of the first engagement portion (65b).

4. The windmill drive unit (1A) according to any of claims 1 to 3, wherein:
the case (10) of the reduction gear is equipped with a detection sensor (20a) configured to detect, when excessive external force is applied to the case (10), the external force; and
the moving mechanism (D) is driven by a detection signal from the detection sensor.
